(19) Europäisches Patentamt
European Patent Office
Office européen des brevets

(11) **EP 3 636 060 B1**

(12) **EUROPÄISCHE PATENTSCHRIFT**

(45) Veröffentlichungstag und Bekanntmachung des Hinweises auf die Patenterteilung:
**18.01.2023  Patentblatt 2023/03**

(21) Anmeldenummer: **19197289.2**

(22) Anmeldetag: **13.09.2019**

(51) Internationale Patentklassifikation (IPC):
***A01B 63/112*** *(2006.01)*

(52) Gemeinsame Patentklassifikation (CPC):
**A01B 63/112**

(54) **VERFAHREN ZUM BETRIEB EINER ARBEITSFAHRZEUG-ARBEITSGERÄT-KOMBINATION, SYSTEM FÜR EINE ARBEITSFAHRZEUG-ARBEITSGERÄT-KOMBINATION UND EINE ARBEITSFAHRZEUG-ARBEITSGERÄT-KOMBINATION**

METHOD FOR OPERATING A WORKING VEHICLE - WORKING APPLIANCE COMBINATION, SYSTEM FOR A WORKING VEHICLE - WORKING APPLIANCE COMBINATION AND A WORKING VEHICLE - WORKING APPLIANCE COMBINATION

PROCÉDÉ DE FONCTIONNEMENT D'UNE COMBINAISON D'APPAREIL DE TRAVAIL ET DE VÉHICULE DE TRAVAIL, SYSTÈME POUR UNE COMBINAISON D'APPAREIL DE TRAVAIL ET DE VÉHICULE DE TRAVAIL ET COMBINAISON D'APPAREIL DE TRAVAIL ET DE VÉHICULE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2018  DE 102018217426**

(43) Veröffentlichungstag der Anmeldung:
**15.04.2020  Patentblatt 2020/16**

(73) Patentinhaber: **Deere & Company**
**Moline, IL 61265 (US)**

(72) Erfinder: **Billich, Manuel**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(56) Entgegenhaltungen:
**EP-A1- 1 889 531**

**Beschreibung**

Die Erfindung betrifft ein Verfahren zum Betrieb einer Arbeitsfahrzeug-Arbeitsgerät-Kombination mit einem Teilsystem zur Einstellung der Arbeitsfahrzeug-Arbeitsgerät-Kombination. Weiterhin betrifft die Erfindung ein System und eine Arbeitsfahrzeug-Arbeitsgerät-Kombination zur Durchführung dieses Verfahrens.

Arbeitsfahrzeug-Arbeitsgerät-Kombinationen sind bekannt, insbesondere als ein Arbeitsfahrzeug, das mit einem Arbeitsgerät verbunden ist, im Speziellen als ein Arbeitsfahrzeug mit einem angekoppelten und/oder angehängten Arbeitsgerät.

Das Arbeitsfahrzeug kann zum Ziehen und/oder Schieben des Arbeitsgeräts eingesetzt werden, insbesondere im Baugewerbe bei Bauarbeiten oder in der Landwirtschaft zur Feldbearbeitung. Das Arbeitsfahrzeug kann eine Zugmaschine oder eine Baumaschine, insbesondere eine landwirtschaftliche oder eine baugewerbliche Zugmaschine, im Speziellen ein Traktor oder dergleichen sein. Das Arbeitsfahrzeug kann zwei-, drei- oder vierrädrig oder mehrrädrig sein und/oder eine Gleiskette aufweisen. Im Weiteren kann das Arbeitsfahrzeug einen Zweirad- oder Vierrad-Antrieb umfassen. Ein Arbeitsfahrzeug kann eine Fahrerkabine, einen Motor und ein Getriebe umfassen. Das Arbeitsfahrzeug kann ein auf dem Boden gezogenes Arbeitsgerät oder ein mit dem Boden oder der Erde in Eingriff kommendes Arbeitsgerät und/oder ein mit auf dem Boden oder darin befindlichen Objekten in Eingriff kommendes Arbeitsgerät antreiben.

Die Arbeitsfahrzeug-Arbeitsgerät-Kombination kann auch ein Teilsystem aufweisen, insbesondere eine Betätigungseinheit oder eine Anbaueinrichtung, im Speziellen einen Dreipunkt-Kraftheber oder ein Hubwerk. Das Teilsystem ermöglicht es, das Arbeitsgerät auf eine einfache Art und Weise mit dem Arbeitsfahrzeug zu verbinden, also das Arbeitsgerät vor und/oder hinter dem Arbeitsfahrzeug anzuordnen bzw. anzubringen und/oder zu koppeln. Dabei bilden das Arbeitsfahrzeug und das Arbeitsgerät eine funktionsfähige Einheit, beispielsweise indem die Kopplungspunkte am Arbeitsfahrzeug mit den entsprechenden Aufnahmen des Arbeitsgerätes in Verbindung gebracht werden. Das Teilsystem des Arbeitsfahrzeugs kann auch zum Einstellen des Arbeitsgeräts relativ zum Arbeitsfahrzeug und/oder zum Boden verwendet werden, beispielsweise um das Arbeitsgerät relativ zum Arbeitsfahrzeug und/oder Boden anzuheben oder abzusenken. Das Teilsystem kann bevorzugt am Arbeitsfahrzeug angeordnet und/oder befestigt sein, insbesondere lösbar verbunden sein. Der Begriff "Arbeitsgerät", wie er hier verwendet wird, schliesst ohne Beschränkung praktisch jeden Gegenstand ein, der an einem Arbeitsfahrzeug angeordnet und/oder von diesem betrieben werden kann. Das Arbeitsgerät kann beispielsweise ein Anhänger oder eine Walze oder ein Grubber sein.

Der Einsatz des Arbeitsgerätes stellt hohe Anforderungen an die Arbeitsfahrzeug-Arbeitsgerät-Kombination, insbesondere an die Einstellung und das Zusammenspiel des Arbeitsfahrzeugs mit dem Arbeitsgerät. Nur mit einem abgestimmten Betrieb zwischen dem Arbeitsfahrzeug und dem Arbeitsgerät können Arbeiten mit der Arbeitsfahrzeug-Arbeitsgerät-Kombination schnell und effizient durchgeführt werden. Der abgestimmte Betrieb der Arbeitsfahrzeug-Arbeitsgerät-Kombination beruht aber auf einer der Einstellung der Zugkraft, also der Kraft, mit welcher das Arbeitsgerät am Arbeitsfahrzeug angreift bzw. zieht. Beispielsweise besteht bei einer fehlenden Zugkraftregelung bei stark inhomogenen und/oder sehr feuchten Böden aufgrund einer sehr großen Widerstandskraft am Arbeitsgerät die Möglichkeit, dass das Arbeitsfahrzeug steckenbleibt und/oder der Motor abgewürgt wird. Die EP 1 889 531 A1 offenbart eine Zugkraftregelung für einen landwirtschaftlichen Traktor, wobei keine zusätzlichen Messgeräte erforderlich sind.

Aus diesem Grund kann eine Zugkraftregelung vorgesehen sein, die beispielsweise ein Abwürgen des Motors oder eine Reduzierung des Schlupfs der Antriebsräder zu verhindern versucht, indem die Zugkraft des Arbeitsgeräts am Arbeitsfahrzeug gemessen und die Arbeitsfahrzeug-Arbeitsgerät-Kombination eingestellt wird. Bekannte Zugkraftregelungen funktionieren im Wesentlichen wie folgt, zunächst wird die Zugkraft direkt gemessen und eine Abweichung von einer vorgegebenen Referenzzugkraft ermittelt. Anschliessend wird, falls eine Abweichung vorhanden ist, üblicherweise eine Position des Arbeitsgeräts zum Arbeitsfahrzeug und/oder Boden angepasst und/oder das Arbeitsfahrzeug beschleunigt oder abgebremst. Somit ist ein wesentliches Problem der bekannten Arbeitsfahrzeug-Arbeitsgerät-Kombinationen und Verfahren zum Betrieb der Arbeitsfahrzeug-Arbeitsgerät-Kombination, dass diese zu wenige Mechanismen, beispielsweise Parameter, zum Einstellen der Arbeitsfahrzeug-Arbeitsgerät-Kombination, insbesondere des Arbeitsfahrzeugs, vorsehen, sodass keine genaue und effiziente Zugkraftregelung möglich ist. Ein weiterer wesentlicher Nachteil ist die Verwendung der bekannte Kraftmessbolzen (der beispielsweise ein Dehnungsmessgerät einschließt) zur Messung der Zugkraft des Arbeitsgeräts am Arbeitsfahrzeug und zur Erzeugung eines die Zugkraft anzeigenden Signals. Die Genauigkeit des Signals, das von einem derartigen Kraftmessbolzen erzeugt wird, ist abhängig von der Art des Arbeitsgeräts. Ausserdem verschmutzen die bekannten Kraftmessbolzen zur Zugkraftmessung schnell, was eine fehlerhafte Zugkraftmessung verursacht. Auch benötigen die Kraftmessbolzen zu viel Bauraum in der Arbeitsfahrzeug-Arbeitsgerät-Kombination. Somit kann ein weiteres Problem der bekannten Zugkraftregelungen und der bekannten Systeme zur Zugkraftregelung einer Arbeitsfahrzeug-Arbeitsgerät-Kombination sein, dass diese nicht hinreichend verlässlich und/oder zu ungenau und/oder zu komplex und damit zu kostenintensiv in der Herstellung und Wartung sind.

Die Druckschrift EP 1 889 531 A1 beschreibt ein Verfahren zum Betrieb einer Arbeitsfahrzeug-Arbeitsgerät-Kombination.

Ausgehend vom Stand der Technik ist es daher eine Aufgabe der vorliegenden Erfindung ein Verfahren zum Betrieb einer Arbeitsfahrzeug-Arbeitsgerät-Kombination, ein System für eine Arbeitsfahrzeug-Arbeitsgerät-Kombination und eine Arbeitsfahrzeug-Arbeitsgerät-Kombination vorzuschlagen, welche die aus dem Stand der Technik bekannten Nachteile weitgehend vermeiden. Insbesondere besteht Bedarf an Verbesserungen bei der Bestimmung und Einstellung der Zugkraft.

Diese Aufgabe wird durch ein Verfahren zum Betrieb einer Arbeitsfahrzeug-Arbeitsgerät-Kombination mit den Merkmalen des Anspruchs 1, ein System für eine Arbeitsfahrzeug-Arbeitsgerät-Kombination mit den Merkmalen des Anspruchs 3 und eine Arbeitsfahrzeug-Arbeitsgerät-Kombination mit den Merkmalen des Anspruchs 5 gelöst.

Die abhängigen Ansprüche beziehen sich auf besonders vorteilhafte Ausführungsformen der Erfindung.

Erfindungsgemäß wird ein Verfahren zum Betrieb einer Arbeitsfahrzeug-Arbeitsgerät-Kombination mit einem Teilsystem zur Einstellung der Arbeitsfahrzeug-Arbeitsgerät-Kombination vorgeschlagen. Das Verfahren kann bevorzugt ein Zugkraftregelungsverfahren für eine Arbeitsfahrzeug-Arbeitsgerät-Kombination, im Speziellen für ein Arbeitsfahrzeug der Arbeitsfahrzeug-Arbeitsgerät-Kombination sein. Das Teilsystem kann bevorzugt zur Einstellung eines Arbeitsgeräts der Arbeitsfahrzeug-Arbeitsgerät-Kombination sein. Das Verfahren umfasst die folgenden Schritte:

i. Ermitteln eines Motordrehmoments eines Motors eines Arbeitsfahrzeugs der Arbeitsfahrzeug-Arbeitsgerät-Kombination in Abhängigkeit von einer eingespritzten Treibstoffmenge,

ii. Ermitteln eines ersten Verlustdrehmoments in Abhängigkeit von einer Motordrehzahl und/oder einer Kühltemperatur des Motors,

iii. Ermitteln eines zweiten Verlustdrehmoments in Abhängigkeit von mindestens einem Ventilatordrehmoment eines Ventilators und/oder ein Generatordrehmoment eines Generators und/oder ein Pumpendrehmoment einer Pumpe des Arbeitsfahrzeugs,

iv. Ermitteln eines Ausgangsdrehmoments, das ein an einem Getriebe des Arbeitsfahrzeugs ab- oder ausgehendes Drehmoment ist, anhand des Motordrehmoments und des ersten und zweiten Verlustdrehmoments und

v. Durchführen einer Steuer-Operation an der Arbeitsfahrzeug-Arbeitsgerät-Kombination und/oder dem Teilsystem in Abhängigkeit vom Ausgangsdrehmoment.

Das Ermitteln des Ausgangsdrehmoments die folgenden Schritte umfasst:

vi. Subtrahieren des erste und/oder zweiten Verlustdrehmoments vom Motordrehmoment, wodurch ein Getriebedrehmoment ermittelt wird, und

vii. Multiplikation des Getriebedrehmoments mit einem ausgewählten Getriebe-Übersetzungsverhältnis und Division durch einen Getriebeeffizienzwert

Wesentlich für die Erfindung ist Proportionalität bzw. Relation zwischen dem Ausgangsdrehmoment und der Zugkraft.

$$M_T^{Aus} \sim F_Z$$

Als Ausgangsdrehmoment kann hierbei ein an einem Getriebe der Arbeitsfahrzeug-Arbeitsgerät-Kombination, insbesondere am Arbeitsfahrzeug, ab- oder ausgehendes Drehmoment verstanden werden. Aufgrund der Proportionalität des Ausgangsdrehmoments und der Zugkraft, kann also mittels der Steuer-Operation und in Abhängigkeit vom ermittelten Ausgangsdrehmoment, das Ausgangsdrehmoment und somit die Zugkraft eingestellt werden. Vorteilshafterweise kann hierbei auf Messbolzen oder ähnliche Messsensoren zur Messung der Zugkraft verzichtet werden. Darüber hinaus ermöglicht diese Massnahme ein genaueres Einstellen der Zugkraft, indem beispielsweise der Motorparameter und/oder der Motorverlustparameter und/oder Lastparameter eingestellt werden. Dadurch, dass das Verfahren ermöglicht die Zugkraft anhand mehrerer Parameter einzustellen, kann das Ausgangsdrehmoment und somit die Zugkraft mit größerer Genauigkeit und Effizienz eingestellt werden.

Das Durchführen der Steuer-Operation an der Arbeitsfahrzeug-Arbeitsgerät-Kombination kann hierbei das Einstellen des Ausgangsdrehmoments umfassen, indem beispielsweise der Motorparameter und/oder der Motorverlustparameter und/oder Lastparameter und/oder der Motordrehmoment und/oder der erste und zweite Verlustdrehmoment der Arbeitsfahrzeug-Arbeitsgerät-Kombination, insbesondere des Arbeitsfahrzeugs, eingestellt werden. Ebenso kann die Steuer-Operation auch das Einstellen des Teilsystems oder eine Mischung aus Einstellen des Ausgangsdrehmoments und Einstellen des Teilsystems umfassen. Vorteilhafterweise kann somit auf aufwändige Elektronik, Aktorik und Sensorik zur Ermittlung und/oder Einstellung der Zugkraft verzichtet werden. Darüber hinaus wird eine wesentlich genauere Einstellung, also Steuerung und/oder Regelung, des Ausgangsdrehmoments und somit der Zugkraft möglich, da jeder der oben genannten Parameter und/oder Drehmomente eingestellt werden kann. Es stehen somit, im Vergleich zu bekannten Verfahren, wesentlich mehr Mechanismen zur Einstellung der Zugkraft zur Verfügung. Ausserdem kann die Zugkraft dadurch verlässlicher und genauer auf einfache Art und Weise ermittelt werden und es kann auf die teuren und wartungsintensiven Kraftmessbolzen verzichtet werden.

Die Arbeitsfahrzeug-Arbeitsgerät-Kombination, insbesondere das Arbeitsfahrzeug und/oder das Arbeitsgerät, kann eine Steuereinheit umfassen. Die Steuereinheit kann derart ausgestaltet und eingerichtet sein, dass das Verfahren zumindest teilweise oder vollständig mit der Steuereinheit durchgeführt werden kann. Beispielsweise können mittels der Steuereinheit der Motorparameter und/oder der Motorverlustparameter und/oder der Lastparameter und/oder Motordrehmoment und/oder das erste und zweite Verlustdrehmoment und/oder das Ausgangsdrehmoment ermittelbar und/oder speicherbar und/oder ausgebbar und/oder einstellbar sein. Ebenso können Änderungen der genannten Parameter und/oder Drehmomente automatisch einstellbar sein. Unter einstellbar oder einstellen kann dabei insbesondere Steuern und/oder Regeln und/oder das Ändern oder Festhalten einer Einstellung der genannten Parameter und/oder Drehmomente und/oder des Teilsystems und/oder der Arbeitsfahrzeug-Arbeitsgerät-Kombination und deren Bestandteile (Arbeitsfahrzeug/Arbeitsgerät) verstanden werden, beispielsweise mittels einer Stelleinrichtung und/oder eines Aktors.

Die Arbeitsfahrzeug-Arbeitsgerät-Kombination kann einen oder mehrere Sensoren zur Erzeugung bzw. Generierung von Sensorsignalen umfassen. Der oder die Sensoren können den Motorparameter und/oder den Motorverlustparameter und/oder den Lastparameter ermitteln und/oder das Sensorsignal der Parameter generieren. Das Sensorsignal kann ausserdem mit der Steuereinheit ermittelt werden. Unter ermitteln kann berechnen und/oder messen und/oder detektieren und/oder auswerten verstanden werden. Im Weiteren kann die Steuereinheit ein elektronisches Modul und/oder ein eingebettetes System sein und/oder einen Speicher und/oder einen Prozessor umfassen. Die Steuereinheit kann mit dem Teilsystem und/oder der einen oder mehreren Stelleinrichtungen und/oder Aktoren und/oder dem Sensor und/oder dem Motor und/oder dem Lastsystem und/oder der Arbeitsfahrzeug-Arbeitsgerät-Kombination, also dem Arbeitsfahrzeug und/oder dem Arbeitsgerät, signalverbunden sein, also datenleitend verbunden sein, und/oder die Verbindung kann kabelgebunden oder kabellos realisiert sein. Der Kommunikationsbus kann beispielsweise Isobus, CAN-Bus oder ähnliches sein kann. Ausserdem können das Teilsystem und/oder die Stelleinrichtung und/oder der Aktor und/oder der Sensor und/oder der Motor und/oder das Lastsystem und/oder die Arbeitsfahrzeug-Arbeitsgerät-Kombination und/oder das Arbeitsfahrzeug und/oder das Arbeitsgerät mittels der Steuereinheit einstellbar sein bzw. eingestellt werden.

Das Ausgangsdrehmoment $M_T^{Aus}$ kann eine Funktion mehrerer Drehmomente, insbesondere des Motordrehmoments $M_{Mot}$ und eines oder mehrerer Verlustdrehmomente $M_{Vn}$, sowie eines ausgewählten Getriebe-Übersetzungsverhältnis $i_T$, also aktuellen Übersetzungsverhältnis der Arbeitsfahrzeug-Arbeitsgerät-Kombination, und eines Getriebeeffizienzwert $\eta_T$ sein,:

$$M_T^{Aus} = f(M_{Mot}, M_{V1}, M_{V2}, ..., M_{Vn}, i_T, \eta_T)$$

Im Speziellen ist das Ausgangsdrehmoment $M_T^{Aus}$ eine Funktion des Motordrehmoments $M_{Mot}$, des ersten Verlustdrehmoments $M_{V1}$ und des zweiten Verlustdrehmoments $M_{V2}$:

$$M_T^{Aus} = f(M_{Mot}, M_{V1}, M_{V2}, i_T, \eta_T)$$

Somit kann das Ausgangsdrehmoment in Abhängigkeit von einigen wenigen Parametern ermittelt werden, was die Ermittlung und Einstellung der Zugkraft wesentlich vereinfacht.
Im Weiteren kann das Motordrehmoment $M_{Mot}$ eine Funktion eines oder mehrerer Motorparameter $b_{Motn}$ sein:

$$M_{Mot} = f(b_{Mot1}, b_{Mot1}, ..., b_{Motn})$$

Das erste Verlustdrehmoment $M_{V1}$ kann eine Funktion eines oder mehrerer Motorverlustparameter $X_{MOTn}$ des Motors sein:

$$M_{V1} = f(X_{MOT1}, X_{MOT2}, ..., X_{MOTn})$$

Das zweite Verlustdrehmoment $M_{V2}$ kann eine Funktion eines oder mehrerer Lastparameter $Y_{MOTn}$ sein:

$$M_{V2} = f(Y_{MOT1}, Y_{MOT2}, ..., Y_{MOTn})$$

Der Motorparameter $b_{Mot}$ und/oder der Motorverlustparameter $X_{Mot}$ und/oder der Lastparameter $Y_{Mot}$ können entweder einer oder mehrere Werte oder aber selbst wieder eine Funktion in Abhängigkeit von weiteren variablen Grössen, also Variablen bzw. Parameter sein.
Die Arbeitsfahrzeug-Arbeitsgerät-Kombination kann auch einen Neigungssensor zur Messung einer Neigung der Arbeitsfahrzeug-Arbeitsgerät-Kombination und/oder ein Kommunikationsmodul zum Empfang einer Standortinformation der Arbeitsfahrzeug-Arbeitsgerät-Kombination aufweisen. Somit kann das Ausgangsdrehmoment in Abhängigkeit von einem dritten Verlustdrehmoment ermittelt werden, wobei das dritte Verlustdrehmoment
in Abhängigkeit von der Neigung und/oder der Standortinformation ermittelbar ist, sodass vorteilhafterweise das Ausgangsdrehmoment, also die Zugkraft, der Arbeitsfahrzeug-Arbeitsgerät-Kombination zusätzlich in Abhängigkeit von der Neigung und/oder der Standortinformation eingestellt werden kann.

Der Motorparameter kann beispielsweise mittels eines Motorsensors direkt oder indirekt ermittelt werden, wobei der Motorsensors an oder in der Arbeitsfahrzeug-Arbeitsgerät-Kombination oder dem Arbeitsfahrzeug oder dem Motor angeordnet sein kann. Der Motorverlustparameter kann beispielsweise mittels eines oder mehreren Motorverlustsensoren direkt oder indirekt ermittelt werden. Der Motorverlustsensor kann an oder in der Arbeitsfahrzeug-Arbeitsgerät-Kombination oder dem Arbeitsfahrzeug oder dem Motor angeordnet sein. Der Lastparameter kann beispielsweise mittels einem oder mehreren Lastsensoren direkt oder indirekt ermittelt werden. Der Lastsensor kann an oder in der Arbeitsfahrzeug-Arbeitsgerät-Kombination, insbesondere dem Arbeitsfahrzeug oder dem Motor, zum Ermitteln des Lastparameters angeordnet sein. Der Motorparameter und/oder der Motorverlustparameter und/oder der Lastparameter und/oder der Motordrehmoment und/oder der erste Verlustdrehmoment und/oder der zweite Verlustdrehmoment können der Steuereinheit, insbesondere in einem Speicher der Steuereinheit, als Wert, insbesondere als berechneter Wert oder als indirekt gemessener Wert, oder als Wertetabelle oder als Kennfeld (engl. Look-up table) vorliegen. Das Motordrehmoment und/oder der erste Verlustdrehmoment und/oder der zweite Verlustdrehmoment können mit den jeweiligen zugeordneten Parametern (Motorparameter/ Motorverlustparameter/Lastparameter) mittels eines Kennfeldes und/oder einer Wertetabelle oder Zuordnungstabelle ermittelt werden und/oder mittels der Steuereinheit berechnet werden. Die Funktionen des Motordrehmoments und/oder des ersten und/oder zweiten Verlustdrehmoments und/oder des Motorparameters und/oder der Motorverlustparameter und/oder der Lastparameter können Näherungsfunktionen sein, die beispielsweise mittels polynomialer Regression bestimmt werden. Die Funktionen des Motordrehmoments und/oder des ersten und/oder zweiten Verlustdrehmoments und/oder des Motorparameters und/oder des Motorverlustparameters und/oder des Lastparameters können aber auch mittels eines Simulationsverfahrens und/oder mittels Messungen an einem Prototyp generiert werden. Die Funktionen des Motordrehmoments und/oder des ersten und/oder zweiten Verlustdrehmoments und/oder des Motorparameters und/oder des Motorverlustparameters und/oder des Lastparameters können in der Steuereinheit hinterlegt sein und/oder mittels der Steuereinheit berechnet werden und/oder als Wertetabelle oder Kennfeld vorliegen.

Das Lastsystem kann an der Arbeitsfahrzeug-Arbeitsgerät-Kombination, bevorzugt am Arbeitsfahrzeug, angeordnet oder als Einrichtung der Arbeitsfahrzeug-Arbeitsgerät-Kombination, insbesondere des Arbeitsfahrzeugs, ausgebildet sein. Der Motor kann das Lastsystem antreiben, beispielsweise kann der Motor einen Hilfsantrieb mittels eines Riemenantriebs antreiben.

Das Lastsystem kann im Speziellen ein Ventilator und/oder ein Generator, beispielsweise ein elektrischer Generator, und/oder eine Pumpe, insbesondere eine Kühlpumpe und/oder eine Hydraulikpumpe sein. Das Lastsystem kann in Abhängigkeit vom Lastparameter ein zweites Verlustdrehmoment generieren, das insbesondere auch am Schwungrad des Motors zusätzlich berücksichtigt werden kann. Sind mehrere Lastsysteme vorhanden, kann das zweite Verlustdrehmoment bevorzugt als Summe der Drehmomente der Lastsysteme in Abhängigkeit vom jeweiligen Lastparameter beschrieben werden.

Die Schritte i. bis v. des Verfahrens können in der angegebenen Reihenfolge durchgeführt, und/oder aber zumindest teilweise zeitlich überlagert und/oder separat erfolgen und/oder wiederholt werden, insbesondere die Schritte i. bis iii. können gleichzeitig oder teilweise zeitlich überlagert erfolgen. Bevorzugt können alle Schritte des Verfahrens während der Fahrt der Arbeitsfahrzeug-Arbeitsgerät-Kombination durchgeführt werden. Im Speziellen wird das Verfahren vom Fahrer und/oder automatisch mit vorgebbarer Fahrsituation angestoßen und dann intermittierend und/oder kontinuierlich durchgeführt. Ebenso kann das Verfahren vom Fahrer und/oder automatisch bei einer vorgebbaren Fahrsituation beendet werden.

Das Ermitteln des Ausgangsdrehmoments, also Schritt iv. des Verfahrens, die folgenden Schritte. Es wird ein Getriebedrehmoment $M_T^{Ein}$ ermittelt, also das einem Getriebe der Arbeitsfahrzeug-Arbeitsgerät-Kombination vom Motor zugeführte Drehmoment, indem vom Motordrehmoment $M_{Mot}$ das erste und zweite Verlustdrehmoment $M_{V1}$, $M_{V2}$ subtrahiert wird. Zur Ermittlung des Ausgangsdrehmoments wird das Getriebedrehmoment $M_T^{Ein}$ mit einem ausgewählten Getriebe-Übersetzungsverhältnis $i_T$, also aktuellen Übersetzungsverhältnis der Arbeitsfahrzeug-Arbeitsgerät-Kombination, multipliziert und durch einen Getriebeeffizienzwert $\eta_T$ dividiert wird.

Das Ausgangsdrehmoment ergibt sich also wie folgt:

$$M_T^{Aus} = M_T^{Ein} \times \frac{i_T}{\eta_T}$$

mit dem Getriebedrehmoment

$$M_T^{Ein} = M_{Mot} - M_{V1} - M_{V2}$$

Im Speziellen, beispielsweise wenn zusätzlich eine Zapfwelle (engl. PTO) genutzt wird, kann auch ein Drehmoment der Zapfwelle als ein drittes Verlustdrehmoment $M_{PTO}^{Ein}$ in das Getriebedrehmoment mit einfliessen:

$$M_T^{Ein} = M_{Mot} - M_{V1} - M_{V2} - M_{PTO}^{Ein}$$

wobei ein Wert des dritten Verlustdrehmoments $M_{PTO}^{Ein}$ an einer PTO-Steuereinheit vorliegen, bzw. abgelegt sein kann. Der Getriebeeffizienzwert $\eta_T$ kann für verschiedene Arten von Getrieben von unterschiedlichen Variablen und/oder Parametern abhängen, sodass sich verschiedene Funktionsansätze für den Getriebeeffizienzwert ergeben können. Für ein stufenloses Getriebe, insbesondere ein IVT-Getriebe (engl. Infinitely Variable Transmission), kann der Getriebeeffizienzwert $\eta_T^{IVT}$ wie folgt beschrieben werden:

$$\eta_T = \eta_T^{IVT} = f(M_T^{Ein}, i_T, n_{Mot}, T_T)$$

mit $n_{Mot}$ = Motordrehzahl und $T_T$ = Temperatur des Getriebeöls

Für ein diskretes oder nicht stufenloses Getriebe, beispielsweise einem Schaltgetriebe, kann der Getriebeeffizienzwert wie folgt beschrieben werden:

$$\eta_T = \eta_T^{DT} = f(M_T^{Ein}, G, n_{Mot}, T_T)$$

mit G = Gang.

Der Getriebeeffizienzwert und/oder das dritte Verlustdrehmoment können eine Näherungsfunktionen sein, die beispielsweise mittels polynomialer Regression bestimmt wird, oder aber auch mittels eines Simulationsverfahrens und/oder mittels Messungen an einem Prototyp generiert werden. Der Getriebeeffizienzwert und/oder das dritte Verlustdrehmoment können in der Steuereinheit hinterlegt sein und/oder mittels der Steuereinheit berechnet werden und/oder als Wertetabelle oder Kennfeld vorliegen.

Bei Verwendung eines IVT Getriebes kann das Ausgangsdrehmoment auch mittels des Kraftübertragungsmittels, beispielsweise dem Variator, ermittelt werden, insbesondere mittels eines Drucksensors am hydraulischen Variator oder einer Messung des Inverterstroms mittels eines Stromsensors am elektrischen Variator. Ein Vorteil dieser Massnahme ist, dass eine Änderungen der Zugkraft, welche aus der Änderung des Übersetzungsverhältnisses des Getriebes resultiert, in die Ermittlung des zur Zugkraft proportionalen Ausgangsdrehmoments mit einfliesst. Darüber hinaus werden die oben genannten Vorteile umgesetzt.

Der Motorparameter ist die eingespritzte Treibstoffmenge und/oder der Motorverlustparameter ist eine Motordrehzahl und/oder die Kühltemperatur der Arbeitsfahrzeug-Arbeitsgerät-Kombination, insbesondere des Arbeitsfahrzeugs und/oder des Motors, und/oder der Lastparameter ist ein Druck und/oder eine Leistung und/oder eine Stromstärke/Spannung und/oder ein Drehmoment und/oder eine Drehzahl und/oder eine Geschwindigkeit und/oder eine Temperatur des Lastsystems. Das oder die Lastsysteme können ein Ventilator und/oder ein Generator und/oder eine Pumpe der Arbeitsfahrzeug-Arbeitsgerät-Kombination, insbesondere des Arbeitsfahrzeugs, sein. Die Pumpe kann insbesondere eine Kühlpumpe und/oder eine Hydraulikpumpe sein.

Im Speziellen kann die Motordrehzahl ein erster Motorverlustparameter sein und/oder die Kühltemperatur des Motors ein zweiter Motorverlustparameter. Im Speziellen kann weiter das Ventilatordrehmoment ein erster Lastparameter und/oder das Generatordrehmoment ein zweiter Lastparameter und/oder das Pumpendrehmoment ein dritter Lastparameter sein. Ausserdem kann das Motordrehmoment $M_{Mot}$ eine Funktion des Motorparameters $b_{Mot1}$, also der eingespritzten Treibstoffmenge sein:

$$M_{Mot} = f(b_{Mot1})$$

Der Motorparameter kann beispielsweise mittels eines Motorsensors, insbesondere einem Einspritzsensor ermittelt werden.

Im Speziellen kann das erste Verlustdrehmoment auf Reibungsverlusten basieren, also insbesondere von der Motordrehzahl und/oder der Kühltemperatur des Motors abhängen. Somit kann das erste Verlustdrehmoment als eine Funktion der Motordrehzahl und/oder der Kühltemperatur des Motors beschrieben werden:

$$M_{V1} = f(n_{MOT}, T_{MOT})$$

Im Speziellen kann mit einem ersten Motorverlustsensor eine Motordrehzahl und/oder mit einem zweiten Motorverlustsensor eine Kühltemperatur des Motors ermittelt werden, die insbesondere ein Geschwindigkeits- oder Drehzahlsensor und/oder ein Temperatursensor sein können.

Im Speziellen kann das zweite Verlustdrehmoment in Abhängigkeit vom Ventilatordrehmoment $M_{Vent}$ als den ersten Lastparameter und/oder das Generatordrehmoment $M_{Elektr}$ als den zweiten Lastparameter und/oder das Pumpendrehmoment $M_{Pumpe}$ als den dritten Lastparameter wie folgt beschrieben werden:

$$M_{V2} = M_{Vent} + M_{Elektr} + M_{Pumpe}$$

Das Ventilatordrehmoment kann als Funktion der Ventilatorgeschwindigkeit, insbesondere der Ventilatordrehzahl $n_{Vent}$, der Variatorantriebsübersetzung

$$i_{Vent} = \frac{n_{Motor}}{n_{Vent}}$$ und des Variantorantriebswirkungsgrads $\eta_{Vent} = f(n_{Mot}, n_{Vent})$ sowie der Ventilatorkonstante $k$ ermittelt werden:

$$M_{Vent} = \frac{k\, n_{Vent}^2}{i_{Vent}}\, \eta_{Vent}$$

Im Speziellen kann die Ventilatordrehzahl mittels einer elektrischen Viskositätskupplung als Lastsensor ermittelt werden.

Ebenso kann das Generatordrehmoment $M_{Elektr}$ als Funktion der Generatorstromstärke $I_{Generator}$, d.h. in Abhängigkeit von der Generatorstromstärke *Generator,* dargestellt und/oder ermittelt werden:

$$M_{Elektr} = f\left(I_{Generator}\right)$$

Das Pumpendrehmoment der Kühlpumpe, die eine Verdrängungspumpe sein kann, kann beispielsweise kann als Funktion in Abhängigkeit von der Drehzahl und/oder Temperatur der Kühlpumpe beschrieben und/oder ermittelt werden:

$$M_{Pumpe} = f\left(n_{Pumpe}, T_{Pumpe}\right)$$

Der Lastparameter kann beispielsweise mittels einem oder mehreren Lastsensoren direkt oder indirekt ermittelt werden.

Zur Ermittlung der oben genannten Parameter und/oder Variablen und/oder Werte, insbesondere der Ventilatordrehzahl $n_{Vent}$, der Generatorstromstärke $I_{Generator}$, der Drehzahl $n_{Pumpe}$ und/oder Temperatur der Kühlpumpe $T_{pumpe}$, können beispielsweise ein Drucksensor und/oder Leistungssensor und/oder Strom-/Spannungssensor und/oder Drehmomentsensor und/oder Drehzahlsensor und/oder Temperatursensor sein.

Die oben beschriebenen Funktionen, insbesondere des Motordrehmoments und/oder das erste Verlustdrehmoment und/oder das zweite Verlustdrehmoment und/oder des Ventilatordrehmoment $M_{Vent}$ und/oder des Generatordrehmoments $M_{Elektr}$ und/oder des Pumpendrehmoments $M_{Pumpe}$, können mittels eines Simulationsverfahrens und/oder aber mittels Messungen an einem Prototypen generiert und gespeichert werden, beispielsweise durch Aufzeichnung und Speicherung der Werte der Funktion, und/oder als Näherungsfunktion (siehe auch oben) angesetzt werden. Ebenso können die Funktionen auch als ein Kennfeld und/oder als Wertetabelle, insbesondere an oder in der Steuereinheit, hinterlegt und/oder verwendet und/oder ermittelt werden und/oder mittels der Steuereinheit berechnet werden.

Das Verfahren zum Betrieb der Arbeitsfahrzeug-Arbeitsgerät-Kombination weist den Vorteil auf, dass die Bestimmung des Ausgangsdrehmoments und somit der Zugkraft ohne aufwändige Messtechnik erfolgen kann, und eine Einstellung der Arbeitsfahrzeug-Arbeitsgerät-Kombination, insbesondere des Arbeitsfahrzeugs und/oder des Arbeitsgeräts, und/oder des Teilsystems auf verlässliche, genaue und technisch einfache Art und Weise realisiert werden kann. Darüber hinaus wird vorteilhafterweise auch eine Einstellung des Ausgangsdrehmoment, also der Zugkraft, unabhängig von der Art des Arbeitsgeräts ermöglicht. Da das Ermitteln des Ausgangsdrehmoments anhand von an die Betriebsbedingungen der Arbeitsfahrzeug-Arbeitsgerät-Kombination angepassten Parametern erfolgt, ermöglicht vorteilhafterweise das Einstellen des Ausgangsdrehmoments mittels Änderungen eines der Parameter und/oder des Motordrehmoments und/oder des ersten und/oder zweiten Verlustdrehmoments eine Anpassung des Betriebspunktes an das optimale Ausgangsdrehmoment für die tatsächlichen Umgebungsbedingungen.

In Ausgestaltung der Erfindung umfasst die Steuer-Operation die folgenden Schritte: Vergleichen des Ausgangsdrehmoments mit einem Referenzdrehmoment und Einstellen der Arbeitsfahrzeug-Arbeitsgerät-Kombination und/oder des Teilsystems, wenn das Ausgangsdrehmoment vom Referenzdrehmoment abweicht. Das Ausgangsdrehmoment kann insbesondere im Falle einer Abweichung des +Ausgangsdrehmoments vom Referenzdrehmoment, an das Referenzdrehmoment angeglichen werden. Es kann also einer der Parameter der Arbeitsfahrzeug-Arbeitsgerät-Kombination, der Motorparameter und/oder der Motorverlustparameter und/oder der Lastparameter, und/oder das Teilsystem und/oder die Arbeitsfahrzeug-Arbeitsgerät-Kombination derart eingestellt werden, dass das Ausgangsdrehmoment an das Referenzdrehmoment angeglichen wird. Wenn das Ausgangsdrehmoment nicht vom Referenzdrehmoment abweicht, kann die Steuer-Operation Einstellung des Teilsystems aufrechterhalten. Das Teilsystem kann insbesondere eine Betätigungseinheit, bevorzugt einer hydraulischen und/oder elektronischen Betätigungseinheit, zum Einstellen des Arbeitsgeräts sein. Auch in diesem Fall umfasst die Steuer-Operation die folgenden Schritte, Vergleichen des Ausgangsdrehmoments mit einem Referenzdrehmoment und/oder Einstellen der Betätigungseinheit, wenn das Ausgangsdrehmoment vom Referenzdrehmoment abweicht. Im Speziellen kann mit dem Teilsystem bzw. der Betätigungseinheit der Eingriff des Arbeitsgerätes mit dem Boden und/oder die Lage des Arbeitsgeräts eingestellt oder aufrechterhalten werden, insbesondere kann eine Arbeitstiefe und/oder Höhe des Arbeitsgeräts eingestellt oder aufrechterhalten werden. Gegebenenfalls kann die Steuer-Operation auch mit den in den Verfahrensschritten i. bis iv. genannten Schritten überwacht und geregelt werden. Es ist aber auch möglich, dass eine separate Vorgabe aus dem Vergleich gemäß Schritt v. des Verfahrens fest vorgegeben und gesteuert und/oder geregelt wird. Die Steuer-Operation kann mit der Steuereinheit durchgeführt bzw. eingestellt werden. Das Referenzdrehmoment kann seitens des Bedieners der Arbeitsfahrzeug-Arbeitsgerät-Kombination und/oder automatisiert, beispielsweise als Standardwert oder in Abhängigkeit vom aktuellen Arbeitsort unter Kenntnis der Bodenbeschaffenheiten bereitgestellt werden. Das hier aufgezeigte Verfahren sowie alle Ausführungsformen des Verfahrens bietet somit die Vorteile, dass dadurch die Einstellung der Zugkraft an der Arbeitsfahrzeug-Arbeitsgerät-Kombination, im Speziellen mittels Einstellungen am Arbeitsfahrzeug und/oder Arbeitsgerät und/oder Teilsystem, in verlässlicher, genauer und technisch einfacher Art und Weise realisiert werden können. Somit wird vorteilhafterweise für die Steuer-Operation lediglich die Abweichung zwischen dem Ausgangsdrehmoment und einem Sollwert, insbesondere einem Referenzdrehmoment, verwendet und es wird kein absoluter Wert der Zugkraft benötigt. Darüber hinaus kann die Steuer-Operation zur Einleitung oder Verstärkung eines Steueroder Regelvorganges verwendet werden. Diese Massnahme verbessert die Genauigkeit und erhöht die Regelgüte, mit der das Arbeitsgerät mittels des Teilsystems bzw. der Betätigungseinheit eingestellt werden kann.

Die Erfindung betrifft weiter ein System, im Speziellen eine Steuervorrichtung, für eine Arbeitsfahrzeug-Arbeitsgerät-Kombination, insbesondere zur Durchführung des Verfahrens nach einem der Ansprüche 1 bis 2. Das System umfasst eine Steuereinheit zur Durchführung des Verfahrens und ein Teilsystem zur Einstellung der Arbeitsfahrzeug-Arbeitsgerät-Kombination, insbesondere des Arbeitsgeräts der Arbeitsfahrzeug-Arbeitsgerät-Kombination. Das System ist mittels der Steuereinheit derart betreibbar und/oder einstellbar, dass

- ein Motordrehmoment eines Motors eines Arbeitsfahrzeugs der Arbeitsfahrzeug-Arbeitsgerät-Kombination in Abhängigkeit von einer eingespritzten Treibstoffmenge ermittelbar ist, und
- ein erstes Verlustdrehmoment in Abhängigkeit von einer Motordrehzahl und/oder einer Kühltemperatur des Motors ermittelbar ist, und
- ein zweites Verlustdrehmoment in Abhängigkeit von einem Ventilatordrehmoment eines Ventilators und/oder ein Generatordrehmoment eines Generators und/oder ein Pumpendrehmoment einer Pumpe des Arbeitsfahrzeugs ermittelbar ist, und
- ein Ausgangsdrehmoment der Arbeitsfahrzeug-Arbeitsgerät-Kombination mittels des Motordrehmoments und des ersten und zweiten Verlustdrehmoments ermittelbar ist, und
- mittels der Steuereinheit eine Steuer-Operation an der Arbeitsfahrzeug-Arbeitsgerät-Kombination und/oder dem Teilsystem in Abhängigkeit vom Ausgangsdrehmoment durchführbar ist.

Das Ermitteln des Ausgangsdrehmoments umfasst die folgenden Schritte:

- das erste und/oder zweite Verlustdrehmoment ist vom Motordrehmoment subtrahierbar, wodurch ein Getriebedrehmoment ermittelbar ist, und
- das Getriebedrehmoments mit einem ausgewählten Getriebe-Übersetzungsverhältnis multiplizierbar ist und durch einen Getriebeeffizienzwert dividierbar ist.

Das erfindungsgemässe System weist die oben beschriebenen Vorteile des erfindungsgemässen Verfahrens auf.

In Ausgestaltung der Erfindung umfasst das System mindestens einen Sensor, wobei mit dem Sensor ein Sensorsignal mittels der gemessenen eingespritzten Treibstoffmenge und/oder der Motordrehzahl und/oder die Kühltemperatur und/oder des gemessenen Ventilatordrehmoments und/oder des Generatordrehmoments und/oder des Pumpendrehmoments erzeugbar ist, und das Sensorsignal mit der Steuereinheit (44) erfassbar und auswertbar ist. Die Arbeitsfahrzeug-Arbeitsgerät-Kombination, im speziellen das System, kann einen oder mehrere Sensoren umfassen, insbesondere der zum Verfahren zugehörigen oben beschriebenen Sensoren.

Die Erfindung betrifft weiter eine Arbeitsfahrzeug-Arbeitsgerät-Kombination zur Durchführung eines Verfahrens nach einem der Ansprüche 1 bis 2 und mit einem System nach einem der Ansprüche 3 bis 4. Die erfindungsgemässe Arbeitsfahrzeug-Arbeitsgerät-Kombination weist die oben beschriebenen Vorteile des erfindungsgemässen Verfahrens auf. Im Weiteren können das System und/oder die Arbeitsfahrzeug-Arbeitsgerät-Kombination bei der Durchführung des erfindungsgemässen Verfahrens verwendet werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1 eine schematische Seitenansicht eines ersten Ausführungsbeispiels einer erfindungsgemässen Arbeitsfahrzeug-Arbeitsgerät-Kombination, und

Fig. 2 eine schematische Darstellung des erfindungsgemässen Aufbaus der Arbeitsfahrzeug-Arbeitsgerät-Kombination und der erfindungsgemässen Funktionsweise des Verfahrens gemäss der Erfindung.

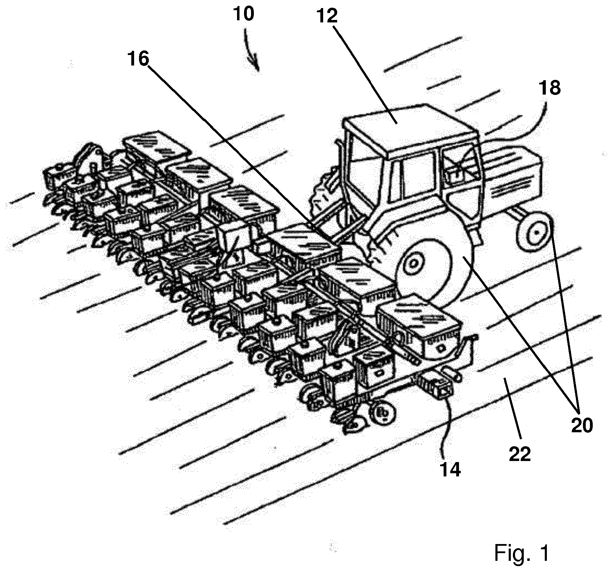

Figur 1 zeigt eine schematische Seitenansicht eines ersten Ausführungsbeispiels einer erfindungsgemässen Arbeitsfahrzeug-Arbeitsgerät-Kombination 10. Die Arbeitsfahrzeug-Arbeitsgerät-Kombination umfasst ein Arbeitsfahrzeug 12, ein Arbeitsgerät 14 und ein Teilsystem 16, das als eine Betätigungseinheit ausgebildet ist.

Das Arbeitsfahrzeug 12 ist ein landwirtschaftliches Fahrzeug in Form eines Traktors, wobei der grundsätzliche Aufbau eines Traktors als dem Fachmann bekannt angenommen wird. Ein Arbeitsfahrzeug 12 im Sinne der Erfindung kann jedes zu Bauarbeiten und/oder zur landwirtschaftlichen Arbeit einsetzbares Fahrzeug sein, beispielsweise ein Traktor, ein Teleskoplader oder eine Baumaschine.

Das Arbeitsfahrzeug 12 weist zur Aufnahme eines Bedieners eine Fahrerkabine 18 auf, wobei innerhalb der Fahrerkabine 18 ein Bedienterminal zur Bedienung des Traktors angeordnet ist. Der Traktor weist mehrere an einer Vorderachse und einer Hinterachse angeordnete Bodeneingriffsmittel 20 in Form von luftgefüllten Rädern auf, welche mit einem Boden 22 zur Übertragung von Antriebskräften in Eingriff stehen. Die Bodeneingriffsmittel 20 werden durch einen Motor, welcher in Form eines Verbrennungsmotors ausgebildet ist, und einem mit diesem zusammenwirkenden Getriebe angetrieben.

Ein Ausgangsdrehmoment des Getriebes wird über einen Antriebsstrang, welcher schematisch dargestellt ist, auf die Bodeneingriffsmittel 20 übertragen, wobei der dargestellte

Traktor 12 ein allradgetriebenes Fahrzeug ist.

Wie gezeigt, dient das Teilsystem 16 dazu, das Arbeitsgerät 14 mit dem Arbeitsfahrzeug 12 zu koppeln und/oder einzustellen, so dass das Arbeitsfahrzeug 12 das Arbeitsgerät 14 zum Transport ziehen (z. B. abschleppen) oder eine bestimmte Aufgabe ausführen kann. Im vorliegenden Ausführungsbeispiel stellt das Arbeitsfahrzeug 12 die Vortriebskraft bereit, um das Arbeitsgerät 14 zu ziehen, wenn das Arbeitsgerät 14 die Aufgabe ausführt. In einer anderen Ausbildung kann das Arbeitsfahrzeug 12 das Arbeitsgerät 14 schieben.

In Figur 1 ist das Arbeitsgerät 14 eine Sämaschine. Das Arbeitsgerät 14 kann jedoch jedes beliebige an das Arbeitsfahrzeug 12 angehängte Arbeitsgerät 14 sein. Auch das Teilsystem 16 kann mit jeder Kombination von Arbeitsfahrzeug 12 und Arbeitsgerät 14 verwendet werden.

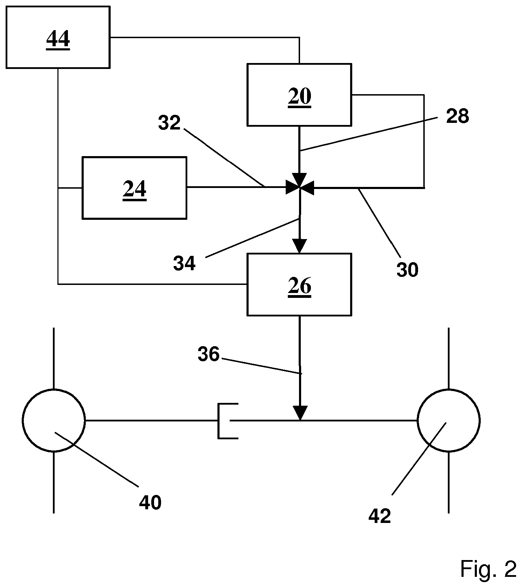

Figur 2 zeigt eine schematische Darstellung des Aufbaus der Arbeitsfahrzeug-Arbeitsgerät-Kombination 10, insbesondere teilweise das System, und die Funktionsweise des Verfahrens gemäss der Erfindung. Die in Figur 2 gezeigte Darstellung des Aufbaus ist ein wesentlicher Bestandteil der in Figur 1 gezeigten Arbeitsfahrzeug-Arbeitsgerät-Kombination 10, sodass im Folgenden lediglich auf die Unterschiede eingegangen wird.

Die Arbeitsfahrzeug-Arbeitsgerät-Kombination 10, insbesondere das System für eine Arbeitsfahrzeug-Arbeitsgerät-Kombination, umfasst eine Steuereinheit zur Durchführung des Verfahrens und ein Teilsystem 16 zur Einstellung der Arbeitsfahrzeug-Arbeitsgerät-Kombination 10, insbesondere des Arbeitsgeräts 14. Die Steuereinheit 44 kann derart ausgestaltet und eingerichtet sein, dass das Verfahren zumindest teilweise oder vollständig mit der Steuereinheit 44 durchgeführt werden kann. Die Steuereinheit 44 ist mit dem Motor 20 und dem Lastsystem 24 und dem Getriebe 26 signalverbunden und diese sind mittels der Steuereinheit 44 einstellbar bzw. können eingestellt werden. Die Arbeitsfahrzeug-Arbeitsgerät-Kombination 10, insbesondere das System, ist mittels der Steuereinheit 44 derart betreibbar und/oder einstellbar, dass

- ein Motordrehmoment 28 eines Motors 20 der Arbeitsfahrzeug-Arbeitsgerät-Kombination 10 in Abhängigkeit von einem Motorparameter ermittelbar ist, und

- ein erstes Verlustdrehmoment 30 in Abhängigkeit von mindestens einem Motorverlustparameter des Motors 20 ermittelbar ist, und

- ein zweites Verlustdrehmoment 32 in Abhängigkeit von mindestens einem Lastparameter mindestens eines Lastsystems 24 der Arbeitsfahrzeug-Arbeitsgerät-Kombination 10 ermittelbar ist, und

- ein Ausgangsdrehmoment 36 der Arbeitsfahrzeug-Arbeitsgerät-Kombination 10 anhand des Motordrehmoments 28 und des ersten und zweiten Verlustdrehmoments 30, 32 ermittelbar ist, und

- mittels der Steuereinheit 44 eine Steuer-Operation an der Arbeitsfahrzeug-Arbeitsgerät-Kombination 10 und/oder dem Teilsystem 16 in Abhängigkeit vom Ausgangsdrehmoment durchführbar ist.

Das Verfahren zum Betrieb einer Arbeitsfahrzeug-Arbeitsgerät-Kombination 10 mit einem Teilsystem 16 zur Einstellung der Arbeitsfahrzeug-Arbeitsgerät-Kombination 10 kann wie folgt durchgeführt werden. Im Schritt i. des Verfahrens wird das Motordrehmoment 28 eines Motors 20 der Arbeitsfahrzeug-Arbeitsgerät-Kombination 10 in Abhängigkeit von einem Motorparameter, insbesondere der eingespritzten Treibstoffmenge, ermittelt bzw. ist ermittelbar. In Schritt ii. wird ein erstes Verlustdrehmoment 30 in Abhängigkeit von mindestens einem Motorverlustparameter des Motors 20 ermittelt. Bevorzugt kann das erste Verlustdrehmoment 30 als eine Funktion der Motordrehzahl und/oder der Kühltemperatur ermittelt werden. In Schritt iii. wird ein zweites Verlustdrehmoment 32 in Abhängigkeit von mindestens einem Lastparameter des mindestens einen Lastsystems 24 der Arbeitsfahrzeug-Arbeitsgerät-Kombination 10 ermittelt bzw. ist ermittelbar. Bevorzugt können das Lastsystem 10 ein Ventilator und/oder ein Generator und/oder eine Pumpe sein, wobei das Ventilatordrehmoment ein erster Lastparameter und/oder das Generatordrehmoment ein zweiter Lastparameter und/oder ein Pumpendrehmoment ein dritter Lastparameter sein können. Die Schritte i., ii. und iii. können gleichzeitig und/oder teilweise zeitlich überlagert und/oder teilweise nacheinander erfolgen. Schritt iv. sieht vor, dass mittels des Motordrehmoments 28 und des ersten und/oder zweiten Verlustdrehmoments 30,32 ein Ausgangsdrehmoment 36 des Arbeitsfahrzeug-Arbeitsgerät-Kombination 10 ermittelt wird. Das Ausgangsdrehmoment 36 wird auf die vordere und hintere Achse 40, 42 übertragen. Im Weiteren wird ein Getriebedrehmoment 34 ermittelt, also das einem Getriebe 26 der Arbeitsfahrzeug-Arbeitsgerät-Kombination 10 vom Motor 20 zugeführtes Drehmoment, indem vom Motordrehmoment 28 das erste und zweite Verlustdrehmoment 30, 32 subtrahiert wird. Im Weiteren wird das Getriebedrehmoment 34 mit einem ausgewählten Getriebe-Übersetzungsverhältnis multipliziert und durch einen Getriebeeffizienzwert dividiert, womit das Ausgangsdrehmoment 36 ermittelt wird. Da das Ausgangsdrehmoment 36 proportional zur Zugkraft ist, kann eine Steuer-Operation an der Arbeitsfahrzeug-Arbeitsgerät-Kombination 10 und/oder dem Teilsystem 16 in Abhängigkeit vom Ausgangsdrehmoment 36 durchgeführt werden. Die Steuer-Operation umfasst hierbei das Vergleichen des Ausgangsdrehmoments 36 mit einem Referenzdrehmoment und das Einstellen der Arbeitsfahrzeug-Arbeitsgerät-Kombination 10 und/oder des Teilsystems 16, wenn das Ausgangsdrehmoment 36 vom Referenzdrehmoment abweicht. Bzgl. der Formeln und Funktion zu den einzelnen Parametern und Drehmomenten wird auf obenstehende Beschreibung verwiesen.

Somit wird vorteilhafterweise eine Einstellung des Ausgangsdrehmoments 36, also der Zugkraft, unabhängig vom Arbeitsgerät 14 ermöglicht, wobei die Einstellung des Ausgangsdrehmoments 36 mittels Änderungen des Motordrehmoments 28 und/oder des ersten und/oder zweiten Verlustdrehmoments 30, 32 erfolgen kann.

**Patentansprüche**

1. Verfahren zum Betrieb einer Arbeitsfahrzeug-Arbeitsgerät-Kombination (10) mit einem Teilsystem (16) zur Einstellung der Arbeitsfahrzeug-Arbeitsgerät-Kombination (10), wobei das Verfahren die folgenden Schritte umfasst:

   • Ermitteln eines Motordrehmoments (28) eines Motors (20) eines Arbeitsfahrzeugs (12) der Arbeitsfahrzeug-Arbeitsgerät-Kombination (10) in Abhängigkeit von einer eingespritzten Treibstoffmenge,
   • Ermitteln eines ersten Verlustdrehmoments (30) in Abhängigkeit von einer Motordrehzahl und/oder einer Kühltemperatur des Motors (20),
   • Ermitteln eines zweiten Verlustdrehmoments (32) in Abhängigkeit von mindestens einem Ventilatordrehmoment eines Ventilators und/oder ein Generatordrehmoment eines Generators und/oder ein Pumpendrehmoment einer Pumpe des Arbeitsfahrzeugs (12),
   • Ermitteln eines Ausgangsdrehmoments (36), das ein an einem Getriebe des Arbeitsfahrzeugs (12) ab- oder ausgehendes Drehmoment ist, anhand des Motordrehmoments (28) und des ersten und zweiten Verlustdrehmoments (30, 32) und
   • Durchführen einer Steuer-Operation an der Arbeitsfahrzeug-Arbeitsgerät-Kombination (10) und/oder dem Teilsystem (16) in Abhängigkeit vom Ausgangsdrehmoment (36),

wobei das Ermitteln des Ausgangsdrehmoments (36) die folgenden Schritte umfasst:

   • Subtrahieren des erste und/oder zweiten Verlustdrehmoments (30, 32) vom Motordrehmoment (28), wodurch ein Getriebedrehmoment (34) ermittelt wird, und
   • Multiplikation des Getriebedrehmoments (34) mit einem ausgewählten Getriebe-Übersetzungsverhältnis und Division durch einen Getriebeeffizienzwert.

2. Verfahren nach Anspruch 1, **dadurch gekennzeichnet, dass** die Steuer-Operation die folgenden Schritte umfasst:

   • Vergleichen des Ausgangsdrehmoments (36) mit einem Referenzdrehmoment und
   • Einstellen der Arbeitsfahrzeug-Arbeitsgerät-Kombination (10) und/oder des Teilsystems (16), wenn das Ausgangsdrehmoment (36) vom Referenzdrehmoment abweicht.

3. System für eine Arbeitsfahrzeug-Arbeitsgerät-Kombination (10) zur Durchführung des Verfahrens nach einem der Ansprüche 1 bis 2, **dadurch gekennzeichnet, dass** das System eine Steuereinheit (44) zur Durchführung des Verfahrens und ein Teilsystem (16) zur Einstellung der Arbeitsfahrzeug-Arbeitsgerät-Kombination (10) umfasst, wobei das System mittels der Steuereinheit (44) derart betreibbar und/oder einstellbar ist, dass

   • ein Motordrehmoment (28) eines Motors (20) eines Arbeitsfahrzeugs (12) der Arbeitsfahrzeug-Arbeitsgerät-Kombination (10) in Abhängigkeit von einer eingespritzten Treibstoffmenge ermittelbar ist, und
   • ein erstes Verlustdrehmoment (30) in Abhängigkeit von einer Motordrehzahl und/oder einer Kühltemperatur des Motors (20) ermittelbar ist, und
   • ein zweites Verlustdrehmoment (32) in Abhängigkeit von einem Ventilatordrehmoment eines Ventilators und/oder ein Generatordrehmoment eines Generators und/oder ein Pumpendrehmoment einer Pumpe des Arbeitsfahrzeugs (12) ermittelbar ist, und

- ein Ausgangsdrehmoment (36) der Arbeitsfahrzeug-Arbeitsgerät-Kombination (10) mittels des Motordrehmoments (28) und des ersten und zweiten Verlustdrehmoments (30, 32) ermittelbar ist, und
- mittels der Steuereinheit (44) eine Steuer-Operation an der Arbeitsfahrzeug-Arbeitsgerät-Kombination (10) und/oder dem Teilsystem (16) in Abhängigkeit vom Ausgangsdrehmoment (36) durchführbar ist,

wobei das Ermitteln des Ausgangsdrehmoments (36) die folgenden Schritte umfasst:

- das erste und/oder zweite Verlustdrehmoment (30, 32) ist vom Motordrehmoment (28) subtrahierbar, wodurch ein Getriebedrehmoment (34) ermittelbar ist, und
- das Getriebedrehmoments (34) mit einem ausgewählten Getriebe-Übersetzungsverhältnis multiplizierbar ist und durch einen Getriebeeffizienzwert dividierbar ist.

**4.** System nach Anspruch 3, **dadurch gekennzeichnet, dass** das System mindestens einen Sensor umfasst, wobei mit dem Sensor ein Sensorsignal mittels der gemessenen eingespritzten Treibstoffmenge und/oder der Motordrehzahl und/oder die Kühltemperatur und/oder des gemessenen Ventilatordrehmoments und/oder des Generatordrehmoments und/oder des Pumpendrehmoments erzeugbar ist, und das Sensorsignal mit der Steuereinheit (44) erfassbar und auswertbar ist.

**5.** Arbeitsfahrzeug-Arbeitsgerät-Kombination zur Durchführung eines Verfahrens nach einem der Ansprüche 1 bis 2 und mit einem System nach einem der Ansprüche 3 bis 4.

**Claims**

**1.** Method for operating a working vehicle-working device combination (10) having a part system (16) for adjusting the working vehicle-working device combination (10), wherein the method comprises the following steps:

- determining an engine torque (28) of an engine (20) of a working vehicle (12) of the working vehicle-working device combination (10) depending on an injected quantity of fuel,
- determining a first torque loss (30) depending on an engine rotational speed and/or a cooling temperature of the engine (20),
- determining a second torque loss (32) depending on at least one fan torque of a fan and/or a generator torque of a generator and/or a pump torque of a pump of the working vehicle (12),
- determining an output torque (36), which is an outgoing or emerging torque from a transmission of the working vehicle (12), on the basis of the engine torque (28) and the first and the second torque loss (30, 32) and
- performing a control operation on the working vehicle-working device combination (10) and/or the part system (16) depending on the output torque (36),

wherein determining the output torque (36) comprises the following steps:

- subtracting the first and/or the second torque loss (30, 32) from the engine torque (28), as a result of which a transmission torque (34) is determined, and
- multiplying the transmission torque (34) by a selected transmission ratio and dividing by a transmission efficiency value.

**2.** Method according to Claim 1, **characterized in that** the control operation comprises the following steps:

- comparing the output torque (36) with a reference torque, and
- adjusting the working vehicle-working device combination (10) and/or the part system (16) if the output torque (36) differs from the reference torque.

**3.** System for a working vehicle-working device combination (10) for carrying out the method according to either of Claims 1 and 2, **characterized in that** the system comprises a control unit (44) for carrying out the method and a part system (16) for adjusting the working vehicle-working device combination (10), wherein the system can be operated and/or can be adjusted by means of the control unit (44) in such a way that

- an engine torque (28) of an engine (20) of the working vehicle (12) of the working vehicle-working device combination (10) can be determined depending on an injected quantity of fuel, and
- a first torque loss (30) can be determined depending on an engine rotational speed and/or a cooling temperature of the engine (20), and
- a second torque loss (32) can be determined depending on a fan torque of a fan and/or a generator torque of a generator and/or a pump torque of a pump of the working vehicle (12), and
- an output torque (36) of the working vehicle-working device combination (10) can be determined by means of the engine torque (28) and the first and second torque loss (30, 32) and

• a control operation can be carried out on the working vehicle-working device combination (10) and/or the part system (16) by means of the control unit (44) depending on the output torque (36),

wherein determining the output torque (36) comprises the following steps:

> • the first and/or the second torque loss (30, 32) can be subtracted from the engine torque (28), as a result of which a transmission torque (34) can be determined, and
> • the transmission torque (34) can be multiplied by a selected transmission ratio and can be divided by a transmission efficiency value.

**4.** System according to Claim 3, **characterized in that** the system comprises at least one sensor, wherein a sensor signal can be generated using the sensor by means of the injected quantity of fuel measured and/or the engine rotational speed and/or the cooling temperature and/or the fan torque measured and/or the generator torque and/or the pump torque, and the sensor signal can be detected and can be evaluated using the control unit (44).

**5.** Working vehicle-working device combination for carrying out a method according to either of Claims 1 and 2 and having a system according to either of Claims 3 and 4.

**Revendications**

**1.** Procédé permettant de faire fonctionner une combinaison d'un véhicule de travail et d'un équipement de travail (10), comprenant un sous-système (16) pour régler la combinaison d'un véhicule de travail et d'un équipement de travail (10), le procédé comprenant les étapes suivantes consistant à :

> • déterminer un couple moteur (28) d'un moteur (20) d'un véhicule de travail (12) de la combinaison d'un véhicule de travail et d'un équipement de travail (10) en fonction d'une quantité de carburant injectée,
> • déterminer un premier couple dissipé (30) en fonction d'une vitesse de rotation de moteur et/ou d'une température de refroidissement du moteur (20),
> • déterminer un deuxième couple dissipé (32) en fonction d'au moins un couple de ventilateur d'un ventilateur et/ou d'un couple de générateur d'un générateur et/ou d'un couple de pompe d'une pompe du véhicule de travail (12),
> • déterminer un couple de sortie (36), qui est un couple sortant ou émanant d'une transmission du véhicule de travail (12), à l'aide du couple moteur (28) et du premier et du deuxième couple dissipé (30, 32), et

• effectuer une opération de commande au niveau de la combinaison d'un véhicule de travail et d'un équipement de travail (10) et/ou du sous-système (16) en fonction du couple de sortie (36),

la détermination du couple de sortie (36) comprenant les étapes suivantes consistant à :

> • soustraire le premier et/ou le deuxième couple dissipé (30, 32) du couple moteur (28) ce qui permet de déterminer un couple de transmission (34), et
> • multiplier le couple de transmission (34) par un rapport de changement de vitesse de transmission et le diviser par une valeur d'efficience de transmission.

**2.** Procédé selon la revendication 1, **caractérisé en ce que** l'opération de commande comprend les étapes suivantes consistant à :

> • comparer le couple de sortie (36) avec un couple de référence, et
> • régler la combinaison d'un véhicule de travail et d'un équipement de travail (10) et/ou le sous-système (16) lorsque le couple de sortie (36) s'écarte du couple de référence.

**3.** Système pour une combinaison d'un véhicule de travail et d'un équipement de travail (10) permettant d'exécuter le procédé selon l'une quelconque des revendications 1 à 2, **caractérisé en ce que** le système comprend une unité de commande (44) pour exécuter le procédé et un sous-système (16) pour régler la combinaison d'un véhicule de travail et d'un équipement de travail (10), le système pouvant être exploité et/ou réglé au moyen de l'unité de commande (44) de telle sorte que

> • un couple moteur (28) d'un moteur (20) d'un véhicule de travail (12) de la combinaison d'un véhicule de travail et d'un équipement de travail (10) peut être déterminé en fonction d'une quantité de carburant injectée, et
> • un premier couple dissipé (30) peut être déterminé en fonction d'une vitesse de rotation de moteur et/ou d'une température de refroidissement du moteur (20), et
> • un deuxième couple dissipé (32) peut être déterminé en fonction d'un couple de ventilateur d'un ventilateur et/ou d'un couple de générateur d'un générateur et/ou d'un couple de pompe d'une pompe du véhicule de travail (12), et
> • un couple de sortie (36) de la combinaison d'un véhicule de travail et d'un équipement de travail (10) peut être déterminé au moyen du couple moteur (28) et du premier et du deuxième couple dissipé (30, 32), et

• l'unité de commande (44) permet d'effectuer une opération de commande au niveau de la combinaison d'un véhicule de travail et d'un équipement de travail (10) et/ou du sous-système (16) en fonction du couple de sortie (36),

la détermination du couple de sortie (36) comprenant les étapes suivantes :

• le premier et/ou le deuxième couple dissipé (30, 32) peuvent être soustraits du couple moteur (28) ce qui permet de déterminer un couple de transmission (34), et

• le couple de transmission (34) peut être multiplié par un rapport de changement de vitesse de transmission sélectionné et peut être divisé par une valeur d'efficience de transmission.

4. Système selon la revendication 3, **caractérisé en ce que** le système comprend au moins un capteur, le capteur permettant de générer un signal de capteur au moyen de la quantité de carburant injectée mesurée et/ou de la vitesse de rotation de moteur et/ou de la température de refroidissement et/ou du couple de ventilateur mesuré et/ou du couple de générateur et/ou du couple de pompe, et le signal de capteur peut être détecté et évalué par l'unité de commande (44).

5. Combinaison d'un véhicule de travail et d'un équipement de travail permettant d'exécuter un procédé selon l'une quelconque des revendications 1 à 2 et comprenant un système selon l'une quelconque des revendications 3 à 4.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1889531 A1